# EUROPÄISCHE PATENTANMELDUNG

(11) **EP 1 459 809 A2**
(43) Veröffentlichungstag der Anmeldung: **22.09.2004**
(21) Anmeldenummer: 04000938.3
(22) Anmeldetag: 17.01.2004
(51) Int. Cl.: B05C 17/005, B01F 13/00

(54) **Vorrichtung zum Ausbringen von Ein- oder Mehrkomponentenmassen und Ventilanordnung hierfür**

(30) Priorität: 21.03.2003 DE 10312843
(71) Anmelder: Kettenbach GmbH & Co. KG, 35713 Eschenburg (DE)
(72) Erfinder: Langer, Bernd, 09405 Zschopau (DE)
(74) Vertreter: KEIL & SCHAAFHAUSEN

(57) **Zusammenfassung**

Die Erfindung betrifft eine Vorrichtung (1) , mit welcher z. B. als Misch- und Dosiergerät Ein- oder Mehrkomponentenmassen, insbesondere eine Basiskomponente und eine Katalysatorkomponente von Abdruckmassen für den Dentalbereich aus wenigstens einer Kartusche (5a, 5b) ausgetragen werden können, wobei jeder Kartusche ein verschiebbar gelagerter Stempel (7a, 7b) zur Druckbeaufschlagung der Kartusche (5a, 5b) zugeordnet ist. Der Aufbau der Vorrichtung (1) wird dadurch vereinfacht, dass dem wenigstens einen Stempel (7a, 7b) zur Betätigung ein Kolben oder ein Zylinder (7a) einer hydraulisch betätigbaren Kolben-Zylinder-Einheit (8) mit einem wenigstens eine Pumpe (13) und einen Vorratsbehälter (9) umfassenden Hydraulikkreislauf zugeordnet ist. Weiter betrifft die Erfindung eine Ventilanordnung für eine derartige Vorrichtung.

## Beschreibung

Die vorliegende Erfindung betrifft eine Vorrichtung zum Ausbringen von Einoder Mehrkomponentenmassen aus wenigstens einer Kartusche, wobei jeder Kartusche ein verschiebbar gelagerter Stempel zur Druckbeaufschlagung der Kartusche zugeordnet ist. Derartige Vorrichtungen werden bspw. als Dosierund Mischgeräte zum Ausbringen einer Basiskomponente und einer Katalysatorkomponente, die zusammen zu einer Abdruckmasse für den Dentalbereich gemischt werden können, eingesetzt. Die Kartuschen sind dabei bspw. als Schlauchbeutel ausgebildet, die durch den Druck der Stempel entleert werden, so dass die Komponenten in den Mischer ausgetragen und in diesem gemischt werden, so dass bspw. eine gebrauchsfertige Abdruckmasse erhalten wird. Weiter betrifft die Erfindung eine in dieser Vorrichtung einsetzbare Ventilanordnung.

Eine derartige Vorrichtung ist z.B. aus der EP 0 492 413 A1 bekannt, bei welcher zum Mischen und Ausbringen von Zweikomponentenmassen zwei in Kartuschen verschiebbare Kolben vorgesehen sind, die von einem Elektromotor über eine Magnetkupplung und ein Kettengetriebe gemeinsam angetrieben werden. Gleichzeitig wird durch diesen Motor auch eine Welle rotierend angetrieben, die mit dem Mischer in Verbindung steht, um die Komponenten miteinander zu durchmischen.

Aus der EP 1 101 538 A2 ist ein Austraggerät für Kartuschen bekannt, welches Stösselplatten aufweist, die mit einem Schlitten durch eine elektromechanische Antriebseinrichtung und Gewindespindeln verschiebbar sind. Auch in der EP 1 010 401 A1 ist eine Vorrichtung zum Austragen einer Mehrkomponentenmasse offenbart, dessen auf Kartuschen einwirkende Stempel von einem Elektromotor über eine Gewindespindel antreibbar sind.

In der EP 0 787 535 B1 ist ein Austraggerät für mindestens zwei Komponenten beschrieben, das für jede Komponente einen Dosierzylinder mit einem Vorschubkolben aufweist. Zum Betrieb dieses Gerätes kann eine elektrische, pneumatische oder manuell betätigbare Antriebseinheit vorgesehen sein.

Nach dem Abschalten dieser bekannten Vorrichtungen sollte der Antrieb der Kolben sofort stehen bleiben, um ein Nachlaufen der miteinander vermischten Komponenten zu vermeiden, so dass die ausgetragene Masse exakt dosierbar ist und nicht durch Rückfließen in einem Mischer kontaminiert wird und ggf. in diesem aushärtet. Bei der aus der EP 0 492 413 A1 bekannten Vorrichtung wird dies bspw. über eine mit dem Ein- und Ausschalten des motorischen Kolbenantriebs ein- und ausrückbare Magnetkupplung erreicht, über welche die Kolben mit dem motorischen Antrieb verbunden sind. Der Aufbau einer derartigen Vorrichtung zum Aufbringen von Ein- oder Mehrkomponentenmassen wird hierdurch kompliziert und damit in der Herstellung teuer. Für den Antrieb der Kolben sind viele teilweise reparaturanfällige Komponenten notwendig, so dass auch die Betriebskosten der bekannten Vorrichtungen durch Wartungs- oder Reparaturarbeiten hoch sind.

Bei einigen bekannten Geräten ist es auch möglich, dass nach dem Abschalten des Antriebs eine Komponente aus einer ersten Kartusche in einen Mischer oder eine zweite Kartusche strömt und sich mit der dort aufgenommenen anderen Komponente mischt. Im Falle einer Basis- und einer Katalysatorkomponente härten diese z. B. im Mischer aus, so dass dieser verstopft und unbrauchbar wird.

Es ist daher Aufgabe der vorliegenden Erfindung, eine Vorrichtung der eingangs genannten Art bereitzustellen, bei welcher Komponentenmassen auch mit hohem Austragsvolumen exakt dosierbar sind , wobei die Vorrichtung eine geringe Reparaturanfälligkeit aufweisen und mit wenigen Bauteilen kompakt und kostengünstig herstellbar sein soll. Weiter ist es eine Aufgabe der Erfindung eine Ventilanordnung mit einer Öffnung für einen hohen Volumenstrom bereitzustellen, die sich auch bei hohem Druck mit geringen Stellkräften öffnen lässt.

Diese Aufgabe wird erfindungsgemäß im Wesentlichen dadurch gelöst, dass dem wenigstens einen Stempel zur Betätigung ein Kolben oder ein Zylinder einer hydraulisch betätigbaren Kolben-Zylinder-Einheit mit einem wenigstens eine Pumpe und einen Vorratsbehälter umfassenden Hydraulikkreislauf zugeordnet ist. Durch den Einsatz einer hydraulisch betätigbaren Kolben-Zylinder-Einheit, durch welche der oder die Stempel in der Vorrichtung verschoben werden, kann eine besonders exakte Dosierung der auszutragenden Massen erreicht werden, da der hydraulisch auf den oder die Stempel aufgebrachte Druck rasch aufgebaut und nach dem Abschalten auch rasch wieder abgebaut werden kann. Zudem kann auf die bei den bekannten Geräten notwendigen Zahnstangen, Kettengetriebe, Zahnradgetriebe, Spindeln oder dgl., welche zur Umsetzung einer Rotationsbewegung der Antriebswelle des Motors in eine Linearbewegung des Kolbens erforderlich sind, verzichtet werden. Die erfindungsgemäße Vorrichtung kann somit kompakter und mit weniger Komponenten gebaut werden, wodurch auch die Fertigungskosten gesenkt werden können. Gleichzeitig arbeitet die hydraulisch betätigbare Kolben-Zylinder-Einheit nahezu wartungsfrei und mit geringer Reparaturanfälligkeit.

Bei einer Vorrichtung mit mehreren Kartuschen und mehreren Stempeln kann jedem Stempel eine ggf. individuell betätigbare Kolben-Zylinder-Einheit zugeordnet sein, so dass die Komponenten aus den Kartuschen mit exakt einstellbarem Austragsvolumen ausgebracht werden können. Auf diese Weise lassen sich durch das einstellbare Austragsvolumen jeder Kartusche unterschiedliche Mischungsverhältnisse der Komponenten definiert einstellen.

Nach einer bevorzugten Ausführungsform der Erfindung ist wenigstens einer der Stempel ein Kolben oder ein Zylinder, der hydraulisch betätigbaren Kolben-Zylinder-Einheit. Auf diese Weise kann die erfindungsgemäße Vorrichtung besonders platzsparend gefertigt werden, da wenigstens einer der Stempel gleichzeitig als Kolben oder Zylinder der Kolben-Zylinder-Einheit und als Stempel zur Beaufschlagung der Kartuschen dient. Zudem wird bei diesem Aufbau die Anzahl der erforderlichen Bauteile weiter reduziert.

In Weiterbildung dieses Erfindungsgedankens ist es vorgesehen, dass wenigstens ein Stempel durch ein auf der den Kartuschen zugewandten Seite verschlossenes, zylindrisches Rohr gebildet ist, welches als Zylinder auf einem feststehenden Kolben verschiebbar ist. Der Zylinder gleitet folglich auf einem feststehenden Kolben, so dass die erforderliche Länge der erfindungsgemäßen Vorrichtung nur etwa der Länge der ausgefahrenen Kolben-Zylinder-Einheit entspricht. Eine derartige Anordnung eines Zylinders mit einem kolbenstangenlosen Kolben, der nur einseitig mit einem Druckmedium beaufschlagt wird, wird auch als Plunger-Zylinder bezeichnet.

Wenn der Kolben als ein Hohlkolben ausgebildet ist, kann dieser gleichzeitig als Vorratsbehälter in dem Hydraulikkreislauf dienen. Es ist dadurch nicht erforderlich, einen separaten Vorratsbehälter für Öl oder eine andere geeignete Hydraulikflüssigkeit bereitzustellen. Der Aufbau der erfindungsgemäßen Vorrichtung wird auf diese Weise weiter vereinfacht und der erforderliche Bauraum kann reduziert werden.

Nach einer bevorzugten Ausführungsform der Erfindung ist es vorgesehen, dass die Kolben-Zylinder-Einheit einen Hohlkolben aufweist, der auf der dem Stempel zugewandeten Seite mit einem Ventil versehen ist, welches einen ersten Ventilteller umfasst, der gegen die Kraft wenigstens einer Feder durch den Fluiddruck in dem Zylinder gegen einen ersten Ventilsitz abdichtend anlegbar ist. Bei Betätigung der Pumpe baut sich in dem Zylinder ein Fluiddruck auf, durch den das Ventil selbsttätig geschlossen wird, indem der erste Ventilteller gegen die Kraft einer Feder abdichtend gegen den Ventilsitz gepresst wird. Eine aufwändige Steuerung zum Verschließen des Ventils kann bei dieser Anordnung entfallen.

In Weiterbildung dieses Gedankens ist es vorgesehen, dass der erste Ventilsitz und der erste Ventilteller von einer Stange durchsetzt sind, an deren dem Zylinder zugewandten Ende ein zweiter, kleinerer Ventilteller ausgebildet ist, der durch den Fluiddruck in dem Zylinder gegen einen zweiten, in dem ersten, größeren Ventilteller vorgesehenen zweiten Ventilsitz abdichtend anlegbar ist. Diese Stange, die den zweiten Ventilteller trägt, ermöglicht es, nach Abschalten der Pumpe den Fluiddruck in dem Zylinder rasch abzubauen. Hierzu wird der zweite, kleinere Ventilteller über die Stange von dem zweiten Ventilsitz gelöst, so dass das Fluid durch den ersten Ventilteller von dem Zylinder in den Hohlkolben abfließen kann. Sobald der Fluiddruck in dem Zylinder auf diese Weise reduziert wurde, wird auch der erste, größere Ventilteller durch die Kraft der Federn von dem Ventilsitz abgehoben, so dass das Fluid mit hohem Volumenstrom aus dem Zylinder in den Hohlkolben strömen kann.

Zusätzlich oder alternativ hierzu ist es möglich, nach Abschalten der Pumpe den Fluiddruck in dem Zylinder dadurch abzubauen, dass die Pumpe eine definierte Leckage von zumindest 0,2 ml/s aufweist. Ein Teil des hydraulischen Fluids kann somit nach dem Abschalten einer derartigen Pumpe durch diese zurück in den Vorratsbehälter strömen, wodurch der Fluiddruck in dem Zylinder so weit abgesenkt wird, dass sich der erste Ventilteller durch die Kraft der wenigstens einen Feder von dem ersten Ventilsitz abhebt und das Fluid auch durch das Ventil mit hohem Volumenstrom aus dem Zylinder in den Vorratsbehälter strömen kann.

Vorzugsweise ist der erste Ventilsitz in einer Kappe ausgebildet, die wenigstens eine von dem ersten Ventilteller verschließbare Öffnung und eine zweite, kleinere Öffnung zur Zufuhr von Fluid von der Pumpe in den Zylinder aufweist. Der Hohlkolben dient bei dieser Ausgestaltung nicht nur als Vorratsbehälter für das hydraulische Fluid, sondern es wird auch die Druckleitung von der Pumpe zu dem Zylinder durch den Hohlkolben geführt. Der Aufbau der erfindungsgemäßen Vorrichtung lässt sich auf diese Weise weiter vereinfachen und der erforderliche Bauraum wird weiter reduziert.

Ein besonders exaktes Dosieren der auszutragenden Massen kann dadurch erreicht werden, dass bei der erfindungsgemäßen Vorrichtung zwei Stempel vorgesehen sind, welche insbesondere dieselbe Länge, aber verschiedene Durchmesser aufweisen, und die durch eine gemeinsame Kolben-Zylinder-Einheit parallel zueinander verschiebbar gelagert sind. Hierzu sind die beiden Stempel vorzugsweise mit einem Schlitten verbunden, welcher auf wenigstens einer Schiene verschiebbar gelagert ist. Die beiden Stempel werden auf diese Weise parallel zueinander über dem Schlitten auf den Schienen geführt, so dass ein Verkanten der Stempel vermieden wird. Zudem ist es nicht erforderlich, eine besondere Führung des Zylinders auf dem Hohlkolben vorzusehen, da der Zylinder über den Schlitten geführt wird. Durch diese Führung der Stempel auf dem Schlitten wird die Reibung der Stempel und auch der Kolben-Zylinder-Einheit vorteilhafterweise gesenkt.

Bspw. beim Auswechseln der Kartuschen kann es erforderlich sein, die Stempel rasch aus einer ausgefahrenen Position der Kolben-Zylinder-Einheit in eine zurückgezogene Position zu bewegen. Hierzu ist dem Schlitten vorzugsweise ein Handrad zum manuellen Verschieben des Schlittens zugeordnet. Weiter kann ein Verschieben der Stempel auch dann erreicht werden, wenn das Handrad mit einem Ritzel verbunden ist, welches mit einer Zahnstange in Eingriff bringbar ist. Der Schlitten mit den Stempeln kann folglich sowohl durch Drehen des Handrades entlang der Zahnstange bewegt werden, als auch manuell verschoben werden, wenn das Ritzel außer Eingriff mit der Zahnstange ist. Dabei kann entweder das Ritzel ortsfest an einem Rahmen oder dgl. gelagert sein, während sich die Zahnstange zusammen mit den Stempeln verschiebt, oder das Ritzel ist zusammen mit den Stempeln relativ zu der ortsfest angeordneten Zahnstange verschiebbar.

Vorzugsweise werden die aus der Vorrichtung ausgebrachten Komponenten in einem Mischer durchmischt, welcher über eine (Mischer-) Welle antreibbar ist. Diese Welle kann bspw. über einen Zahnriemen mit dem Motor verbunden sein, welcher auch die Pumpe antreibt.

In Weiterbildung dieses Gedankens ist die den Mischer antreibende Welle im Wesentlichen parallel zu der Rotationsachse des Mischers gelagert und trägt auf ihrer dem Mischer zugewandten Seite ein Zahnrad, welches mit einem ggf. lösbar an dem Mischer vorgesehenen Ritzel in Eingriff bringbar ist.

Das Auswechseln von Kartuschen und/oder dem Mischer wird dadurch erleichtert, dass die Welle über eine Ausrückeinrichtung aus einer in den Mischer eingreifenden Position zurückgezogen wird, wenn der Motor nicht betätigt wird. Vorzugsweise sind dabei der Motor, die Ausrückeinrichtung und die den zweiten Ventilteller tragende Stange gemeinsam über einen Schalter betätigbar. Durch diesen Schalter können folglich gleichzeitig der die Pumpe und die Welle antreibende Rotor eingeschaltet, die Ausrückeinrichtung zum Eingriff der Welle in den Mischer betätigt und die Stange in einer Position bewegt werden, in welcher der zweite Ventilteller abdichtend auf dem zweiten Ventilsitz in dem ersten Ventilteller gehalten wird, so dass sich in dem Zylinder ein Fluiddruck aufbaut. Andererseits kann durch diesen Schalter der Motor ausgeschaltet, die Welle aus dem Mischer ausgerückt und der zweite Ventilteller von dem zweiten Ventilsitz gelöst werden, so dass sich der Fluiddruck in dem Zylinder abbaut und der erste Ventilteller von dem ersten Ventilsitz abhebt.

Wenn die Kolben-Zylinder-Einheit einen doppelt wirkenden Zylinder aufweist, kann der Schlitten mit den Stempeln in beiden Richtungen hydraulisch angetrieben verschoben werden. Dabei ist es auch möglich, den Schlitten mit unterschiedlichen Geschwindigkeiten zu bewegen.

Weiter betrifft die Erfindung eine Ventilanordnung, die insbesondere zur Steuerung einer Kolben-Zylinder-Einheit in einer Vorrichtung der oben genannten Art geeignet ist, mit einer ersten, größeren Öffnung, welche einen ersten Ventilsitz aufweist und durch einen ersten, größeren Ventilteller abdichtend verschließbar ist, wobei in dem ersten Ventilteller eine zweite, kleinere Öffnung vorgesehen ist, welche einen zweiten Ventilsitz aufweist und durch einen zweiten, kleineren Ventilteller abdichtend verschließbar ist. Der erste Ventilteller kann dabei über wenigstens eine Druckfeder in seine von dem ersten Ventilsitz abgehobene Stellung beaufschlagt werden. Vorzugsweise ist der zweite Ventilteller über eine Stange oder dgl. von dem zweiten Ventilsitz abhebbar. Auf diese Weise ist es möglich selbst bei einem hohen auf die Ventilteller wirkenden Druck den zweiten Ventilteller mit vergleichsweise geringer Kraft von seinem Ventilsitz zu lösen. Hierdurch wird ein rascher Druckabbau erzielt, so dass auch der erste Ventilteller leicht von seinem Ventilsitz abgehoben werden kann. Die erfindungsgemäße Ventilanordnung kann somit von einem hohen Volumenstrom durch die erste Öffnung durchströmt werden, ohne dass das Öffnen der Ventilanordnung durch die großen auf den ersten Ventilteller wirkenden Kräfte beeinträchtigt wird.

Im Folgenden wird die Erfindung anhand eines Ausführungsbeispiels und unter Bezugnahme auf die beigefügte Zeichnung näher erläutert. Es zeigen:
- Fig. 1: eine schematische Perspektivansicht der erfindungsgemäßen Vorrichtung,
- Fig. 2: eine schematische Perspektivansicht der Komponenten des Hydraulikkreislaufs gemäß Fig. 1,
- Fig. 3: eine schematische Perspektivansicht einer erfindungsgemäßen Ventilanordnung und
- Fig. 4: eine schematische Perspektivansicht des Ventils nach Fig. 3 mit einer Betätigungseinrichtung.

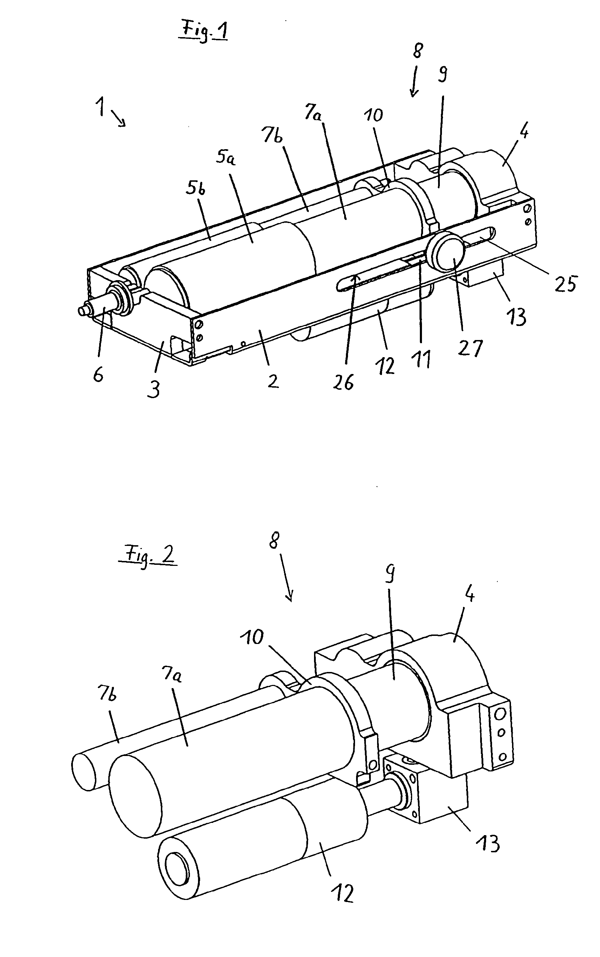

In den Figuren sind Details einer Vorrichtung 1 zum Ausbringen von zwei Komponenten, bspw. einer Basiskomponente und einer Katalysatorkomponente für Dentalabdruckmassen, dargestellt. Die Vorrichtung 1 weist einen U-förmigen Rahmen 2 auf, welcher an zwei einander gegenüberliegenden Enden mit einem Widerlager 3 und einer Kolbenplatte 4 verbunden ist. In dem dem Widerlager 3 zugewandten Bereich der Vorrichtung 1 sind, wie in Fig. 1 dargestellt, zwei Kartuschen 5a und 5b aufgenommen, in denen bspw. Schlauchbeutel mit einer Basiskomponente und einer Katalysatorkomponente zur Herstellung von Abdruckmassen für den Dentalbereich gehalten sein können. Die Kartuschen 5a und 5b weisen im Bereich des Widerlagers 3 Ausbringöffnungen auf, welche in einen in diesem Ausführungsbeispiel dynamischen Mischer 6 münden, in welchem die Komponenten durchmischt und ausgetragen werden können.

Zum Ausbringen der Komponenten aus den Kartuschen 5a und 5b ist jeder Kartusche ein (Ausdrück-) Stempel 7a bzw. 7b zugeordnet, welcher in die Kartuschen 5a und 5b einführbar ist. Zur Betätigung der Stempel 7a und 7b ist in der Vorrichtung 1 eine Kolben-Zylinder-Einheit 8 vorgesehen, welche durch einen fest mit der Kolbenplatte 4 verbundenen Kolben 9 und den als Zylinder dienenden Stempel 7a gebildet wird. Die beiden Stempel 7a und 7b sind dabei über einen Schlitten 10 fest miteinander verbunden, so dass die Stempel gemeinsam und parallel zueinander in dem Rahmen 2 verschiebbar sind. Hierzu sind in dem Rahmen 2 Schienen 11 vorgesehen, auf denen der Schlitten 10 gleitet. Alternativ hierzu kann auch jedem der Stempel 7a, 7b eine separate Kolben-Zylinder-Einheit 8 zugeordnet sein, um die Stempel unabhängig voneinander zu betätigen.

Auf der in Fig. 1 unteren Seite des U-förmigen Rahmens 2 ist ein Getriebemotor 12 angeordnet, der eine Pumpe 13 antreibt. Die Saugleitung der Pumpe 13 ist mit dem Innenraum des als Hohlkolben ausgebildeten Kolbens 9 verbunden, der somit gleichzeitig als Vorratsbehälter für ein hydraulisches Fluid dient. Die Druckleitung der Pumpe 13 ist durch den Hohlkolben 9 geführt und mündet auf der dem Mischer 6 zugewandten Seite des Hohlkolbens 9 in den Stempel 7a, der als Zylinder der Kolben-Zylinder-Einheit 8 dient.

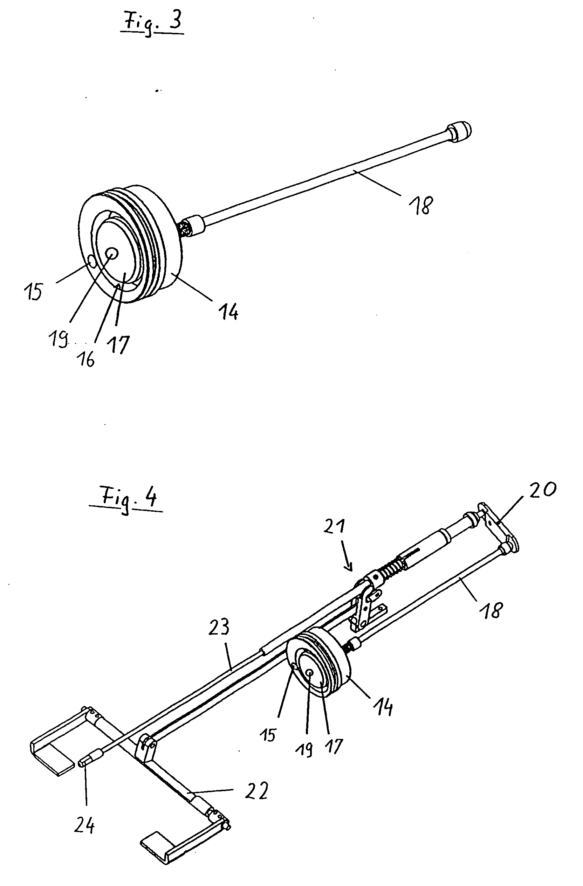

Die dem Mischer 6 zugewandte Seite des Hohlkolbens 9 ist gegenüber dem Zylinder (Stempel) 7a durch eine in Fig. 3 dargestellte Kappe 14 mit einem doppelten Ventil verschlossen. Die Kappe 14 weist eine kleine Öffnung 15 auf, in welche die Druckleitung (nicht dargestellt) der Pumpe 13 mündet. Weiter ist die Kappe 14 mit einer größeren Öffnung 16 versehen, welche durch einen ersten, größeren Ventilteller 17 gegen einen ersten Ventilsitz in der Kappe 14 abdichtend verschließbar ist. Zwischen dem Ventilteller 17 und der Kappe 14 sind dabei mehrere Druckfedern (nicht dargestellt) angeordnet, welche den Ventilteller 17 in einer von dem Ventilsitz in der Kappe 14 entfernten Position halten, so dass ein Fluid durch die Öffnung 16 in der Kappe 14 durchtreten kann.

Die Kappe 14 und der erste, größere Ventilteller 17 sind von einer Stange 18 durchsetzt, auf deren in Fig. 3 linken Seite ein als Schließkugel ausgebildeter zweiter, kleinerer Ventilteller 19 vorgesehen ist. Der zweite Ventilteller 19 kann über die Stange 18 aus der in der Figur dargestellten geschlossenen Position, in welcher der zweite Ventilteller 19 gegen einen Ventilsitz, der in dem ersten Ventilteller 17 ausgebildet ist, abdichtend angepresst wird, in eine geöffnete Position verschoben werden, in welcher der zweite Ventilteller 19 von dem zweiten Ventilsitz in dem ersten Ventilteller 17 abgehoben wird. Ein Fluid kann dann durch den ersten Ventilteller 17 von dem Zylinder 7a in den Hohlkolben 9 strömen. Die beiden Ventilteller 17, 19 der Kappe 14 bilden somit ein Doppelventil.

Wie in Fig. 4 dargestellt, ist die Stange 18 auf ihre dem zweiten Ventilteller 19 abgewandten Seite mit einem Kipphebel 20 verbunden, welcher über eine. Ausrückeinrichtung 21 verschwenkbar ist, die wiederum durch eine Schaltwelle 22 betätigbar ist. Gleichzeitig ist durch die Ausrückeinrichtung 21 eine Mischerwelle 23 in axialer Richtung entgegengesetzt zu der Stange 18 verschiebbar. Die Mischerwelle 23 ist dabei über einen in den Figuren nicht dargestellten Antrieb, bspw. einen Zahnriemen, eine Kette oder dgl., durch den Motor 12 antreibbar und greift mit ihrem mischerseitigen Ende 24 in den Mischer 6 ein, wenn die Stange 18 über den Kipphebel 20 den zweiten Ventilteller 19 gegen den zweiten Ventilsitz in dem ersten Ventilteller 17 presst. Alternativ zu der dargestellten Ausführungsform kann die Mischerwelle 23 im Wesentlichen parallel zu der Rotationsachse des Mischers 6 gelagert sein. Die Mischerwelle 23 ist dann bspw. mit einem Zahnrad versehen, welches mit einem Ritzel des Mischers 6 in Eingriff bringbar ist. Beim Einlegen eines Mischers 6 in die Vorrichtung 1 wird dieser somit automatisch über das Zahnrad und das Ritzel mit der Mischerwelle verbunden.

In dem U-förmigen Rahmen 2 ist weiter ein seitliches, schlitzförmiges Fenster 25 vorgesehen, welches auf seiner in der Figur oberen Seite mit einer Zahnstange 26 versehen ist. Dem Schlitten 10, welcher die Stempel 7a und 7b trägt, ist ein Handrad 27 zugeordnet, welches mit einem Ritzel (nicht dargestellt) verbunden ist. Dieses Ritzel ist mit der Zahnstange 26 in dem seitlichen Fenster 25 in Eingriff bringbar, so dass durch ein Drehen des Handrads 27 der Schlitten mit den Stempeln 7a und 7b entlang der Zahnstange 26 verschiebbar ist. Wenn das Ritzel mit der Zahnstange außer Eingriff gebracht ist, lässt sich der Schlitten 10 über das Handrad 27 frei auf den Schienen 11 verschieben.

Im Folgenden wird die Funktion der Vorrichtung 1 näher erläutert. Zum Auspressen von bspw. einer Basiskomponente und einer Katalysatorkomponente einer dentalen Abformmasse aus den Kartuschen 5a und 5b werden diese gemeinsam in die Vorrichtung 1 eingelegt, die als Misch- und Dosiergerät dient. Die Stempel 7a und 7b sind dabei so weit zurückgezogen, dass der Schlitten 10 in der Nähe der Kolbenplatte 4 liegt. Die Mischerwelle 23 ist dabei in ihrer in Richtung auf die Kolbenplatte 4 zurückgezogenen Position, so dass die Kartuschen 5a und 5b gemeinsam mit einem Mischer 6 in die Vorrichtung 1 einlegbar sind.

Die den Kartuschen 5a und 5b zugeordneten Stempel 7a bzw. 7b werden nun gemeinsam über den Schlitten 10 in die Kartuschen 5a und 5b eingeführt. Dies kann entweder durch ein Drehen des Handrads 27 erfolgen, wobei das mit dem Handrad 27 verbundene Ritzel in die Zahnstange 26 des seitlichen Fensters 25 eingreift oder durch ein Verschieben des Schlittens 10, wenn das Ritzel außer Eingriff mit der Zahnstange 26 ist. In gleicher Weise ist es auch möglich, dass die Stempel 7a und 7b durch Betätigung der Kolben-Zylinder-Einheit 8 in die Kartuschen eingefahren werden. Hierzu wird die Schalterwelle 22 betätigt, so dass die Mischerwelle 23 mit ihrem mischerseitigen Ende 24 in den Mischer 6 einrückt und gleichzeitig die Stange 18 in Richtung auf die Kolbenplatte 4 zurückgezogen wird, so dass der zweite Ventilteller 19 abdichtend gegen den zweiten Ventilsitz in dem ersten Ventilteller 17 gepresst wird. Durch diese Betätigung der Schalterwelle 22 wird gleichzeitig der Motor 12 eingeschaltet, welcher die Pumpe 13 und die Mischerwelle 23 antreibt.

Auf diese Weise wird ein hydraulisches Fluid, bspw. Öl oder dgl., aus dem als Vorratsbehälter dienenden Hohlkolben 9 durch die Pumpe 13 über die Öffnung 15 in der Kappe 14 in den Zylinder 7a gepumpt. Durch das in den Zylinder 7a einströmende Fluid baut sich in dem Zylinder 7a ein Druck auf, so dass der erste Ventilteller 17 gegen die Kraft der zwischen diesem und der Kappe 14 angeordneten Federn abdichtend gegen den ersten Ventilsitz in der Kappe 14 gepresst wird. Durch den weiter steigenden Fluiddruck in dem Zylinder 7a wird dieser relativ zu dem Hohlkolben 9 in Richtung von der Kolbenplatte 4 weg verschoben, so dass der Schlitten 10 mit den beiden Stempeln 7a und 7b in die Kartuschen 5a bzw. 5b zum Austragen der Komponenten eingeführt wird.

Zum Abschalten der Vorrichtung 1 wird die Schalterwelle 22 in die entgegengesetzte Richtung verschwenkt, so dass die Mischerwelle 23 aus dem Mischer 6 ausrückt und der Motor 12 anhält. Gleichzeitig wird hierdurch die Stange 18 in Richtung auf dem Mischer 6 zu bewegt, so dass der zweite Ventilteller 19 von seinem Ventilsitz in dem ersten Ventilteller 17 abgehoben wird. Der Fluiddruck in dem Zylinder 7a kann sich auf diese Weise rasch abbauen, so dass auch der erste Ventilteller 17 durch die Kraft der zwischen diesem und der Kappe 14 angeordneten Federn von seinem Ventilsitz in der Kappe 14 abgehoben wird. Auf diese Weise kann das Fluid von dem Zylinder 7a in den Hohlkolben 9 zurückfließen. Der Abbau des Fluiddrucks in dem Zylinder 7a erfolgt dabei so rasch, dass ein Nachfließen der Komponenten aus den Kartuschen 5a und 5b in den Mischer 6 vermieden wird. Eine Kontamination der Komponenten in den Kartuschen kann folglich nicht auftreten.

Zum Auswechseln der Kartuschen 5a und 5b können die Stempel 7a und 7b in Richtung auf die Kolbenplatte 4 aus den Kartuschen zurückgezogen werden, wenn der die Pumpe 13 antreibende Motor 12 ausgeschaltet ist und der zweite Ventilteller 19 von seinem Ventilsitz in dem ersten Ventilteller 17 abgehoben ist. Das Verschieben der Stempel 7a und 7b kann entweder durch ein Drehen an dem Handrad 27 erfolgen, wenn das mit dem Handrad 27 verbundene Ritzel mit der Zahnstange 26 in Eingriff ist, oder durch ein Verschieben des Schlittens 10 auf den Schienen 11, wenn das Ritzel außer Eingriff mit der Zahnstange 26 steht.

Das hydraulische Fluid kann in dieser Stellung des zweiten Ventiltellers 19 durch die von der Stange 18 durchsetzte Öffnung in dem ersten Ventilteller 17 und, wenn der erste Ventilteller 17 von seinem Ventilsitz in der Kappe 14 abgehoben ist, auch durch die Kappe 14 in den Hohlkolben 9 zurückfließen. Der Schlitten 10 mit dem Stempeln 7a und 7b lässt sich daher besonders leichtgängig in beide Richtungen verschieben.

Alternativ zu dem manuellen Zurückziehen des Schlittens 10 mit den Stempeln 7a und 7b ist es auch möglich, den Schlitten 10 hydraulisch aus den Kartuschen 5a und 5b auszufahren, wenn die Kolben-Zylinder-Einheit 8 einen doppelt wirkenden Zylinder (nicht dargestellt) aufweist. Über die Steuerung der Pumpenleistung ist es zudem möglich, den Schlitten 10 mit den Stempeln 7a und 7b in unterschiedlichen Geschwindigkeiten auf den Schienen 11 zu verschieben, bspw. mit einem schnellen Vor- und/oder Rücklauf und einem langsameren Arbeitshub.

### Bezugszeichenliste

- 1: Vorrichtung
- 2: U-förmiger Rahmen
- 3: Widerlager
- 4: Kolbenplatte
- 5a, 5b: Kartuschen
- 6: Mischer
- 7a: Stempel/ Zylinder
- 7b: Stempel
- 8: Kolben-Zylinder-Einheit
- 9: (Hohl-) Kolben
- 10: Schlitten
- 11: Schiene
- 12: Motor
- 13: Pumpe
- 14: Kappe
- 15: (kleinere) Öffnung
- 16: (größere) Öffnung
- 17: erster Ventilteller
- 18: Stange
- 19: zweiter Ventilteller
- 20: Kipphebel
- 21: Ausrückeinrichtung
- 22: Schalterwelle
- 23: (Mischer)-Welle
- 24: mischerseitiges Ende
- 25: Fenster
- 26: Zahnstange
- 27: Handrad

## Patentansprüche

1. Vorrichtung zum Ausbringen von Ein- oder Mehrkomponentenmassen, insbesondere einer Basiskomponente und einer Katalysatorkomponente von Abdruckmassen für den Dentalbereich, aus wenigstens einer Kartusche (5a, 5b), wobei jeder Kartusche (5a, 5b) ein verschiebbar gelagerter Stempel (7a, 7b) zur Druckbeaufschlagung der Kartusche (5a, 5b) zugeordnet ist, **dadurch gekennzeichnet, dass** dem wenigstens einen Stempel (7a, 7b) zur Betätigung ein Kolben (9) oder ein Zylinder (7a) einer hydraulisch betätigbaren Kolben-Zylinder-Einheit (8) mit einem wenigstens eine Pumpe (13) und einen Vorratsbehälter (9) umfassenden Hydraulikkreislauf zugeordnet ist.

2. Vorrichtung nach Anspruch 1, **dadurch gekennzeichnet, dass** zur Druckbeaufschlagung von wenigstens zwei Kartuschen (5a, 5b) wenigstens zwei Stempel (7a, 7b) vorgesehen sind, denen jeweils eine unabhängig voneinander betätigbare Kolben-Zylinder-Einheit (8) zugeordnet ist.

3. Vorrichtung nach Anspruch 1 oder 2, **dadurch gekennzeichnet, dass** wenigstens einer der Stempel (7a, 7b) ein Kolben oder ein Zylinder (7a) der hydraulisch betätigbaren Kolben-Zylinder-Einheit (8) ist.

4. Vorrichtung nach Anspruch 3, **dadurch gekennzeichnet, dass** wenigstens ein Stempel (7a, 7b) durch ein auf der den Kartuschen (5a, 5b) zugewandten Seite verschlossenes, zylindrisches Rohr gebildet ist, welches als Zylinder (7a) auf einem feststehenden Kolben (9) verschiebbar ist.

5. Vorrichtung nach Anspruch 4, **dadurch gekennzeichnet, dass** der Kolben ein Hohlkolben (9) ist, welcher der Vorratsbehälter in dem Hydraulikkreislauf der Kolben-Zylinder-Einheit (8) ist.

6. Vorichtung nach Anspruch 1, **dadurch gekennzeichnet, dass** die Kolben-Zylinder-Einheit (8) einen Hohlkolben (9) aufweist, der auf der dem Stempel (7a, 7b) zugewandten Seite mit einem Ventil (16, 17, 19) versehen ist, welches einen ersten Ventilteller (17) umfasst, der gegen die Kraft wenigstens einer Feder durch den Fluiddruck in dem Zylinder (7a) gegen einen ersten Ventilsitz abdichtend anlegbar ist.

7. Vorrichtung nach Anspruch 6, **dadurch gekennzeichnet, dass** der erste Ventilsitz und der erste Ventilteller (17) von einer Stange (18) durchsetzt sind, an deren dem Zylinder (7a) zugewandten Ende ein zweiter Ventilteller (19) ausgebildet ist, der durch den Fluiddruck in dem Zylinder (7a) gegen einen zweiten, in dem ersten Ventilteller (17) vorgesehenen zweiten Ventilsitz abdichtend anlegbar ist.

8. Vorrichtung nach Anspruch 6 oder 7, **dadurch gekennzeichnet, dass** die Leckage der Pumpe (13) im abgeschalteten Zustand zumindest 0,2 ml/s beträgt.

9. Vorrichtung nach einem der Ansprüche 6 bis 8, **dadurch gekennzeichnet, dass** der erste Ventilsitz (17) in einer Kappe (14) ausgebildet ist, die wenigstens eine von dem ersten Ventilteller (17) verschließbare Öffnung (16) und eine zweite, kleinere Öffnung (15) zur Zufuhr von Fluid von der Pumpe (13) in den Zylinder (7a) aufweist.

10. Vorrichtung nach einem der Ansprüche 1 bis 9, **dadurch gekennzeichnet, dass** zwei Stempel (7a, 7b), die insbesondere die selbe Länge aber verschiedene Durchmesser aufweisen, durch eine gemeinsame Kolben-Zylinder-Einheit (8) parallel zueinander verschiebbar gelagert sind.

11. Vorrichtung nach Anspruch 10, **dadurch gekennzeichnet, dass** die beiden Stempel (7a, 7b) mit einem Schlitten (10) verbunden sind, welcher auf wenigstens einer Schiene (11) verschiebbar gelagert ist.

12. Vorrichtung nach Anspruch 11, **dadurch gekennzeichnet, dass** dem Schlitten (10) wenigstens ein Handrad (27) zum manuellen Verschieben des Schlittens (10) zugeordnet ist.

13. Vorrichtung nach Anspruch 12, **dadurch gekennzeichnet, dass** das Handrad (27) mit einem Ritzel verbunden ist, welches zum Verschieben des Schlittens (10) mit einer Zahnstange (26) in Eingriff bringbar ist.

14. Vorrichtung nach einem der vorhergehenden Ansprüche, **dadurch gekennzeichnet, dass** die Pumpe (13) über einen Motor (12) antreibbar ist, der auch eine mit einem Mischer (6) verbindbare Welle (23) antreibt.

15. Vorrichtung nach Anspruch 14, **dadurch gekennzeichnet, dass** die den Mischer (6) antreibende Welle (23) im Wesentlichen parallel zu der Rotationsachse des Mischers (6) gelagert ist und an ihrem mischerseitigen Ende (24) ein Zahnrad trägt, welches mit einem ggf. lösbar an dem Mischer (6) vorgesehenen Ritzel in Eingriff bringbar ist.

16. Vorrichtung nach Anspruch 14, **dadurch gekennzeichnet, dass** die Welle (23) über eine Ausrückeinrichtung (21) aus einer in den Mischer (6) eingreifenden Position zurückgezogen wird, wenn der Motor (12) nicht betätigt wird.

17. Vorrichtung nach Anspruch 16, **dadurch gekennzeichnet, dass** der Motor (12), die Ausrückeinrichtung (23) und die den zweiten Ventilteller (19) tragende Stange (18) gemeinsam über einen Schalter (22) betätigbar sind.

18. Vorrichtung nach einem der vorhergehenden Ansprüche, **dadurch gekennzeichnet, dass** die Kolben-Zylinder-Einheit (8) einen doppelt wirkenden Zylinder umfasst.

19. Ventilanordnung, insbesondere zur Steuerung einer Kolben-Zylinder-Einheit (8) in einer Vorrichtung (1) nach einem der vorhergehenden Ansprüche, mit einer ersten, größeren Öffnung (16), welche einen ersten Ventilsitz aufweist und durch einen ersten, größeren Ventilteller (17) abdichtend verschließbar ist, **dadurch gekennzeichnet, dass** in dem ersten Ventilteller (17) eine zweite, kleinere Öffnung vorgesehen ist, welche einen zweiten Ventilsitz aufweist und durch einen zweiten, kleineren Ventilteller (19) abdichtend verschließbar ist:

20. Ventilanordnung nach Anspruch 19, **dadurch gekennzeichnet, dass** der erste Ventilteller (17) über wenigstens eine Druckfeder in seine von dem ersten Ventilsitz abgehobene Stellung beaufschlagt wird.

21. Ventilanordnung nach einem der Ansprüche 19 oder 20, **dadurch gekennzeichnet, dass** der zweite Ventilteller (19) über eine Stange (18) oder dgl. von dem zweiten Ventilsitz abhebbar ist.
